# EUROPEAN PATENT SPECIFICATION

(11) **EP 2 574 774 B1**
(45) Date of publication and mention of the grant of the patent: **06.08.2014**
(21) Application number: 11182933.9
(22) Date of filing: 27.09.2011
(51) Int. Cl.: F03D 1/06

(54) **Method to rotate the rotor of a wind turbine and means to use in this method**
Verfahren zum Drehen des Rotors einer Windturbine und Mittel zur Verwendung dieses Verfahrens
Procédé pour faire tourner le rotor d'une éolienne et moyens pour utiliser ce procédé

(43) Date of publication of application: 03.04.2013
(73) Proprietor: Siemens Aktiengesellschaft, 80333 München (DE)
(72) Inventor: Falkenberg, Peter Loevenskjold, 7400 Herning (DK); Maj, Karl Aage, 8450 Hammel (DK); Poulsen, Henning, 6900 Skjern (DK); Stiesdal, Henrik, 5000 Odense C (DK); Nielsen, Jacob Blach, 7442 Engesvang (DK); Rasmussen, Brian, 7323 Give (DK)

(56) References cited:
- WO-A2-2010/103086
- DE-A1-102008 038 128
- DE-A1-102009 013 876
- US-A1- 2004 041 409
- US-A1- 2011 138 626

## Description

The invention relates to a method to rotate the rotor of a wind turbine and to means to be used in this method.

A wind turbine transfers the energy of the wind into electrical energy. The wind turbine comprises a nacelle that is connected to a tower and a rotor that is connected to the nacelle. The rotor comprises a hub that is rotatable mounted to the nacelle and at least one rotor blade mounted to the hub.

The wind interacts with the rotor blade of the wind turbine in a way that the rotor rotates. The rotation of the rotor is transferred to an electrical generator.

When the wind turbine is erected, the tower is set up and the nacelle is mounted onto the tower. The hub is mounted to the nacelle and the at least one rotor blade is mounted to the hub.

The at least one rotor blade is hoisted up by a crane and connected to the hub. The hub has to be in a predetermined angular rotational position around his axis of rotation to establish the connection between the hub and the rotor blade.

This position corresponds to the direction of the blade during the fastening of the connection. The position can be a horizontal or a vertical arrangement of the hub and the rotor blade for example.

The hub has to be rotated to establish the connection between the hub and a first rotor blade. In the case of more then one rotor blade that has to be mounted, the position of the hub has to be changed. The hub has to be rotated form the first into a second position to establish the connection between the hub and the second rotor blade.

US 2011/0138626 A1 describes an installation system and a method for mounting a rotor blade to a hub on a wind turbine. The method includes coupling a rotor and a stator together, the rotor rotatably connected to the hub. The method further includes rotating the stator in a first direction, wherein rotation of the stator causes the rotor and the hub to rotate in the first direction.

US 2006/0147308 A1 describes a method of mounting rotor blades to a rotor hub which is connected to a pod of a wind turbine power installation, including the following steps: rotating the rotor hub into a predetermined first position, fitting a rotor blade, rotation the rotor hub by means of the rotor blade into a predetermined second position, and mounting a second rotor blade, wherein the rotation of the rotor hub is effected in the direction of the effect of gravitational force of the first rotor blade which is already mounted.

This shows the disadvantage that there are no gravitational forces to support the rotation before the connection between the hub and the first rotor blade is established. Furthermore the gravitational force of a first rotor blade will support the rotation into a second position only for a part of the rotation. In a certain second part of the rotation the rotation needs to be performed against the gravitational forces of the first rotor blade. Thus the described method is not reliable enough to perform the rotation of the hub during the installation of the rotor blades.

It is the aim of the invention to provide a improved method and apparatus to rotate the hub of a wind turbine during the installation of the rotor blades.

The aim is reached by the features of the independent claim. Preferred embodiments of the invention are described in the dependent claims.

A direct driven wind turbine 1 comprises an electrical generator with a rotor and a stator, a hub constructed to receive a rotor blade, and actuator means. The hub is connected to the rotor of the electrical generator, and the hub and the rotor of the electrical generator are rotatable mounted in respect to the stator of the generator.

The actuator means are constructed and arranged to rotate the hub of the wind turbine in respect to the stator of the electrical generator. The actuator means is the electrical generator, whereby the electrical generator of the wind turbine is used as a motor to rotate the hub of the wind turbine.

In a direct driven wind turbine the rotor of the electrical generator is either connected directly to the hub of the wind turbine. Or it is connected via a shaft to the hub of the wind turbine.

The rotor blades are mounted to the hub during the erection of the wind turbine. Although most of the wind turbines comprise three rotor blades, wind turbines with one or two rotor blades are known.

The hub is connected to the rotor of the electrical generator and is rotatable together with the rotor. The actuator means are constructed and arranged to rotate the rotor of the electrical generator together with the hub of the wind turbine.

Thus the hub is rotated by rotating the rotor of the electrical generator.

The electrical generator of the wind turbine is an electrical machine and shows the same type of construction as a motor. In general, a generator can also be used as a motor.

Also the electrical generator of a direct driven wind turbine can be used as a motor to rotate the rotor. Thus no additional drive is needed to rotate the hub and the rotor of the electrical generator. Thus no installation time for additional equipment is needed. Thus time is saved during the installation or the service of the wind turbine.

A rotation of the hub is necessary for the installation of the blades, but it can also be necessary before or after the installation of the blades. This can be during the installation of at least a segment of the generator, during maintenance and service, or for the dismantling of the wind turbine.

In a preferred embodiment the electrical generator comprises an electrical connection that is connected to a power source to operate the electrical generator as a motor.

To operate the electrical generator of the wind turbine as a motor, the generator needs to be electrically connected to a power source. This power soured can be a battery, an emergency generator or the grid power for example.

Thus the generator can be run as a motor by a battery or an emergency power source. Thus the hub of the wind turbine can also be rotated when the wind turbine is not connected to the power grid. Thus the hub can be rotated during the installation of the wind turbine, when the electrical system is not fully in operation.

When the wind turbine is already connected to the power grid, the power grid can be used as a power source. Thus no additional power source is needed. Thus the normal electrical connection of the generator can be used, which transports power from the generator to the power grid during normal operation. Thus no additional electrical connection is needed.

In a preferred embodiment a controller is connected to the power source to control the operation of the electrical generator as a motor.

The generator needs a special control of the power fed into the generator while the generator is used as a motor. Thus the electrical generator can be used as a motor.

For the installation of rotor blades at the hub, the hub needs to be positioned correctly. By the use of a controller the rotation of the hub can be started and stopped precisely. Thus the position of the hub can be controlled precisely.

In a preferred embodiment the controller is the controller of the wind turbine.
The wind turbine comprises a controller. This controller can also be used to control the generator of the wind turbine that is used as a motor for the rotation of the hub. Thus no additional controller is needed. Thus material and installation time is saved.

In another preferred embodiment the controller is a controller separate from the turbine controller.
During the installation of the wind turbine the controller of the wind turbine might not yet be installed or the controller is not yet connected to electrical power.
Thus the controller even might be a controller, which is designed for the generator to use as a motor. Thus the controller is optimized to control the generator. Thus the controller can be reused in other wind turbine installation after the installation of the wind turbine blades is finished.

In a preferred embodiment the power source comprises the converter of the wind turbine.

The converter or inverter of the wind turbine is used to convert the power generated by the generator to harmonize it with the power grid. This converter can be used to convert the power of a power supply to run the generator as a motor.

The power supply can be a battery, an emergency generator or the power grid for example.

Thus no additional converter is needed to convert the power to run the generator as a motor. Thus no additional converter needs to be installed. Thus installation time is saved.

In a preferred embodiment the wind turbine comprises a brake-disc and a brake, whereby the brake is acting on the brake-disc to brake the rotation of the electrical generator.

Thus the rotational speed of the generator that is used as a motor can be reduced. Thus the rotation can be stopped. Thus the accuracy of the positioning is improved.

In a preferred embodiment the wind turbine comprises a locking system to lock the rotor of the electrical generator to fix the position of the rotor in respect to the stator.

The position of the rotor of the generator is fixed in respect to the stator of the generator.
Thus the rotor of the generator can be locked to the stator. Thus unintentional rotation of the rotor is prevented.

A rotor blade is mounted to a hub of a direct driven wind turbine, by turning the hub into a predetermined position around the axis of rotation of the rotor of the electrical generator. The rotor is turned by use of the electrical generator, whereby the electrical generator of the wind turbine is used as a motor to rotate the hub of the wind turbine. A rotor blade is mounted to the hub.

Thus the rotor blades are mounted to the hub of the wind turbine while the crane used for mounting the blades stays in one place during installation of more then one rotor blade.

Thus time for setting up the crane at a different location is saved. Thus installation time is saved.

The invention is shown in more detail by help of figures.
The figures show a preferred configuration and do not limit the scope of the invention.
- FIG 1: shows the installation of a rotor blade at a wind turbine.
- FIG 2: shows a cut through a hub and a generator of a direct driven wind turbine.

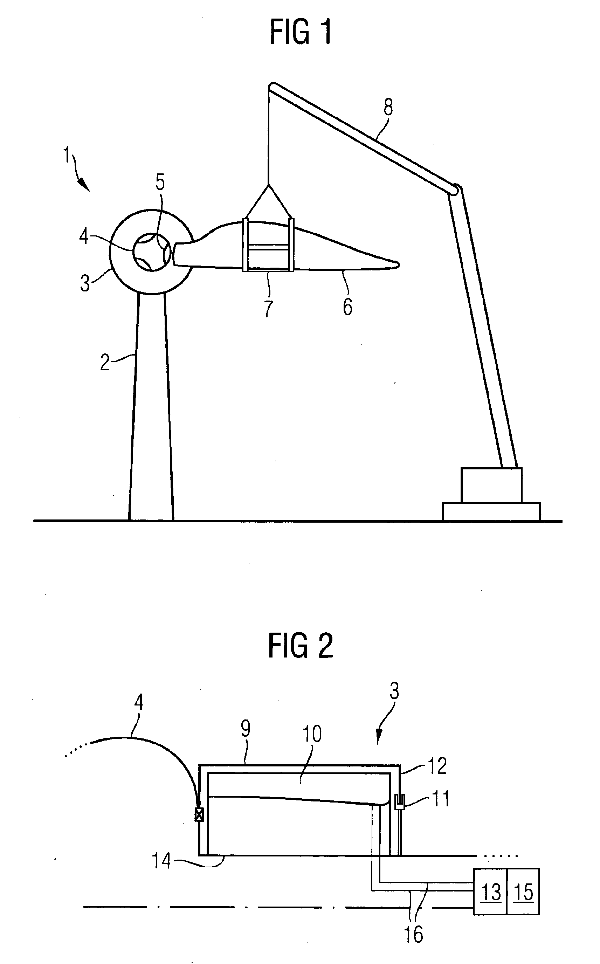

FIG 1 shows the installation of a rotor blade at a wind turbine.

The direct driven wind turbine 1 comprises a tower 2, a generator 3 and a hub 4. The hub 4 comprises at least one location 5 to attach a rotor blade 6.

The rotor blade 6 is held by a lifting device 7 and is lifted by a crane 8. To attach the rotor blade 6 at the location 5 at the hub 4, the hub 4 is turned into a certain predetermined position.

In this example three locations 5 to attach a rotor blade are provided.

The crane 8 can stay in the same location to attach a second blade at a second location. To achieve this, the hub 4 is rotated by 120 degree. After the rotation of the hub 4 the location to receive the second rotor blade is in the same position where the location 5 of the first rotor blade 6 was, when the first rotor blade 6 was attached.

FIG 2 shows a cut through a hub and a generator of a direct driven wind turbine.

FIG 2 shows a cut through a hub 4 and a generator 3 of a direct driven wind turbine. The cut is along the axis of rotation of the generator 3. The generator 3 comprises a rotor 9 and a stator 10. The stator 10 is attached to a support structure 14. A brake disc 12 is attached to the rotor 9 of the generator 3. A brake 11 is attached to the support structure 14.

The brake 11 is used to brake the rotation of the rotor 9 of the generator 3. The brake 11 comprises a locking mechanism that locks the position of the rotor 9 of the generator 3 in relation to the stator 10.

In this embodiment the rotor 9 of the generator 3 is equipped with permanent magnets and the stator 10 of the generator is equipped with windings. During the normal operation of the wind turbine windings of the stator are connected to an electrical system of the wind turbine and to the power grid.

The stator 10 of the generator 3 is connected to the electrical system via an electrical connection 16. This electrical system comprises a power supply 13. In this embodiment this power supply is an auxiliary power supply used during the installation of the wind turbine.

The auxiliary power supply feeds power into the stator 10 of the generator 3 to allow the use of the generator 3 as a motor. The electrical system further comprises a controller 15 that controls the power from the power supply 13.

When the hub 4 is rotated, the controller 15 feeds power from the power supply 13 into the stator 10 to accelerate the rotor 9 of the electrical machine 3.

The hub 4 is connected to the rotor 9 and rotates with the rotor 9 around the axis of rotation of the generator 3. The hub 4 is rotated into a predetermined position to attach a rotor blade for example.

A rotation of the hub can also be necessary for other purposes during the installation of the wind turbine. A rotation of the hub can also be necessary during maintenance and service.

When the predetermined position is reached the rotation of the hub 4 is reduced by the help of the brake 11 and the brake disc 12 and the position of the rotor 9 is locked by the locking mechanism.

## Claims

1. Direct driven wind turbine (1)
comprising an electrical generator (3) with a rotor (9) and a stator (10), a hub (4) constructed to receive a rotor blade (6), and actuator means, -
whereby the hub (4) is connected to the rotor (9) of the electrical generator (3),
- whereby the hub (4) and the rotor (9) of the electrical generator (3) are rotatable mounted in respect to the stator (10) of the generator (3), **characterized in that** the electrical generator (3) of the wind turbine, which is used as actuator means, is constructed and arranged as a motor to rotate the hub (4) of the wind turbine (1) in respect to the stator (10) of the electrical generator (3) to turn the hub into a predetermined position to mount a rotor blade to the hub.

2. Direct driven wind turbine (1) according to claim 1,
wherein the electrical generator (3) comprises an electrical connection (16) that is connected to a power source (13) to operate the electrical generator (3) as a motor.

3. Direct driven wind turbine (1) according to claim 2,
wherein a controller (15) is connected to the power source (13) to control the operation of the electrical generator (3) as a motor.

4. Direct driven wind turbine (1) according to claim 3,
wherein the controller (15) is the controller of the wind turbine (1).

5. Direct driven wind turbine according to claim 3, wherein the controller (15) is a controller separate from the turbine controller.

6. Direct driven wind turbine according to one of the claims 2 to 5, wherein the power source (13) comprises the converter of the wind turbine.

7. Direct driven wind turbine (1) according to one of the preceding claims, wherein the wind turbine (1) comprises a brake-disc (12) and a brake (11), whereby the brake is acting on the brake-disc (12) to brake the rotation of the electrical generator (3).

8. Direct driven wind turbine (1) according to claim 7,
wherein the wind turbine (1) comprises a locking system to lock the rotor (9) of the electrical generator (3) to the stator (10).

9. Method to mount a rotor blade to a hub of a direct driven wind turbine (1), which is configured according to one of the preceding claims, comprising the steps of:
- turning the hub (4) into a predetermined position around the axis of rotation of the rotor (9) of the electrical generator (3) by use of the electrical generator (3), whereby the electrical generator (3) of the wind turbine (1) is used as a motor to rotate the hub (4) of the wind turbine (1), and
- mounting a rotor blade (6) to the hub (4).

## Patentansprüche

1. Getriebelose Windenergieanlage (1)
- die einen elektrischen Generator (3) mit einem Rotor (9) und einem Stator (16), eine Nabe (4), die so konstruiert ist, dass sie ein Rotorblatt (6) aufnimmt, und Stellgliedmittel umfasst,
- wobei die Nabe (4) mit dem Rotor (9) des elektrischen Generators (3) verbunden ist,
- wobei die Nabe (4) und der Rotor (9) des elektrischen Generators (3) in Bezug zu dem Stator (10) des Generators (3) drehbar angebracht sind,
**dadurch gekennzeichnet, dass**
der elektrische Generator (3) der Windenergieanlage, der als Stellgliedmittel benutzt wird, als Motor konstruiert und angeordnet ist, der die Nabe (4) der Windenergieanlage (1) in Bezug zu dem Stator (10) des elektrischen Generators (3) zum Anbringen eines Rotorblatts an der Nabe in eine vorbestimmte Position dreht.

2. Getriebelose Windenergieanlage (1) nach Anspruch 1, bei der der elektrische Generator (3) eine elektrische Verbindung (16) umfasst, die zum Betreiben des elektrischen Generators (3) als Motor mit einer Stromquelle (13) verbunden ist.

3. Getriebelose Windenergieanlage (1) nach Anspruch 2, bei der eine Steuereinrichtung (15) zum Steuern des Betriebs des elektrischen Generators (3) als Motor mit der Stromquelle (13) verbunden ist.

4. Getriebelose Windenergieanlage (1) nach Anspruch 3, bei der es sich bei der Steuereinrichtung (15) um die Steuereinrichtung der Windenergieanlage (1) handelt.

5. Getriebelose Windenergieanlage nach Anspruch 3, bei der es sich bei der Steuereinrichtung (15) um eine von der Anlagensteuereinrichtung getrennte Steuereinrichtung handelt.

6. Getriebelose Windenergieanlage nach einem der Ansprüche 2 bis 5, bei der die Stromquelle (13) den Wechselrichter der Windenergieanlage umfasst.

7. Getriebelose Windenergieanlage (1) nach einem der vorhergehenden Ansprüche, wobei die Windenergieanlage (1) eine Bremsscheibe (12) und eine Bremse (11) umfasst, wobei die Bremse auf die Bremsscheibe (12) einwirkt und die Rotation des elektrischen Generators (3) bremst.

8. Getriebelose Windenergieanlage (1) nach Anspruch 7, bei der die Windenergieanlage (1) ein Arretiersystem zum Arretieren des Rotors (9) des elektrischen Generators (3) am Stator (10) umfasst.

9. Verfahren zum Anbringen eines Rotorblatts an einer Nabe einer nach einem der vorhergehenden Ansprüche konfigurierten getriebelosen Windenergieanlage (1), welches folgende Schritte umfasst:
- Drehen der Nabe (4) um die Drehachse des Rotors (9) des elektrischen Generators (3) in eine vorbestimmte Position durch Verwendung des elektrischen Generators (3), wobei der elektrische Generator (3) der Windenergieanlage (1) als Motor zum Drehen der Nabe (4) der Windenergieanlage (1) benutzt wird, und
- Anbringen eines Rotorblatts (6) an der Nabe (4).

## Revendications

1. Eolienne à entraînement direct (1)
- comprenant un générateur électrique (3) avec un rotor (9) et un stator (10), un moyeu (4) construit pour recevoir une pale de rotor (6), et un moyen d'actionnement,
- moyennant quoi le moyeu (4) est relié au rotor (9) du générateur électrique (3),
- moyennant quoi le moyeu (4) et le rotor (9) du générateur électrique (3) sont montés de manière rotative par rapport au stator (10) du générateur (3), **caractérisée en ce que** le générateur électrique (3) de l'éolienne, qui est utilisé en tant que moyen d'actionnement, est construit et agencé en tant que moteur pour entraîner en rotation le moyeu (4) de l'éolienne (1) par rapport au stator (10) du générateur électrique (3) pour faire tourner le moyeu dans une position prédéterminée afin de monter une pale de rotor sur le moyeu.

2. Eolienne à entraînement direct (1) selon la revendication 1,
dans laquelle le générateur électrique (3) comprend une connexion électrique (16) qui est connectée à une source de puissance (13) pour faire fonctionner le générateur électrique (3) en tant que moteur.

3. Eolienne à entraînement direct (1) selon la revendication 2,
dans laquelle un dispositif de commande (15) est connecté à la source de puissance (13) pour commander le fonctionnement du générateur électrique (3) en tant que moteur.

4. Eolienne à entraînement direct (1) selon la revendication 3,
dans laquelle le dispositif de commande (15) est le dispositif de commande de l'éolienne (1).

5. Eolienne à entraînement direct (1) selon la revendication 3, dans laquelle le dispositif de commande (15) est un dispositif de commande distinct du dispositif de commande de l'éolienne.

6. Eolienne à entraînement direct selon l'une des revendications 2 à 5, dans laquelle la source de puissance (13) comprend le convertisseur de l'éolienne.

7. Eolienne à entraînement direct (1) selon l'une des revendications précédentes, dans laquelle l'éolienne (1) comprend un disque de frein (12) et un frein (11), moyennant quoi le frein agit sur le disque de frein (12) pour freiner la rotation du générateur électrique (3).

8. Eolienne à entraînement direct (1) selon la revendication 7,
dans laquelle l'éolienne (1) comprend un système de blocage pour bloquer le rotor (9) du générateur électrique (3) sur le stator (10).

9. Procédé pour monter une pale de rotor sur un moyeu d'une éolienne à entraînement direct (1), qui est configurée selon l'une des revendications précédentes, comprenant les étapes de :
- rotation du moyeu (4) dans une position prédéterminée autour de l'axe de rotation du rotor (9) du générateur électrique (3) en utilisant le générateur électrique (3), moyennant quoi le générateur électrique (3) de l'éolienne (1) est utilisé en tant que moteur pour entraîner en rotation le moyeu (4) de l'éolienne (1), et
- montage d'une pale de rotor (6) sur le moyeu (4).
